# FASCICULE DE BREVET EUROPEEN

(11) **EP 3 667 217 B1**
(45) Date de publication et mention de la délivrance du brevet: **10.04.2024**
(21) Numéro de dépôt: 19306634.7
(22) Date de dépôt: 12.12.2019
(51) Int. Cl.: F25J 3/04, F25J 5/00, F28F 9/22, F28F 9/02, F15D 1/04, B01D 3/00, F28D 21/00

(54) **APPAREIL DE SÉPARATION OU DE LIQUÉFACTION D'UN GAZ OPÉRANT À DES TEMPÉRATURES CRYOGÉNIQUES**
GERÄT ZUM TRENNEN ODER VERFLÜSSIGEN VON GAS, DAS BEI KRYOGENEN BETRIEBSTEMPERATUREN FUNKTIONIERT
DEVICE FOR SEPARATING OR LIQUEFACTION OF A GAS OPERATING AT CRYOGENIC TEMPERATURES

(30) Priorité: 13.12.2018 FR 1872853
(43) Date de publication de la demande: 17.06.2020
(73) Titulaire: L'Air Liquide, société anonyme pour l'Étude et l'Exploitation des procédés Georges Claude, 75007 Paris (FR)
(72) Inventeur: LEMAIRE, Yann-Pierrick, 94503 Champigny-Sur-Marne (FR); LE BOT, Patrick, 94503 Champigny-Sur-Marne (FR)
(74) Mandataire: Air Liquide

(56) Documents cités:
- DE-U1-212016 000 060
- JP-A- S6 023 785
- JP-A- H10 253 286
- US-A1- 2017 198 988

## Description

La présente invention est relative à un appareil de séparation ou de liquéfaction d'un gaz opérant à des températures cryogéniques, en particulier à un appareil de séparation d'air par distillation cryogénique.

Avec les progrès réalisés sur les performances des garnissages des colonnes à distiller, ces dernières ont des diamètres de plus en plus petits. A l'inverse les tuyauteries transportant les liquides et gaz du procédé aux entrées/sorties des colonnes n'ont pas vu réduire leurs dimensions.

Dès lors, l'encombrement des boîtes froides est de plus en plus contraint par les tuyauteries que par les colonnes elles-mêmes. De surcroît, ces tuyauteries créent également de la perte de charge et donc contribuent à augmenter l'énergie de séparation dépensée.

Il est donc important de développer un concept propre à la tuyauterie permettant de réduire l'énergie spécifique de séparation d'un gaz par exemple d'air et/ou de réduire l'encombrement de la boîte froide.

Dans les appareils de séparation d'un fluide à température cryogénique, un changement de direction d'une tuyauterie se fait par l'intermédiaire d'un coude. Ceux-ci peuvent être de plusieurs conceptions mais lorsque le diamètre d'une tuyauterie est trop élevé (> 40 pouces ou 101,6 cm), il est techniquement nécessaire de mettre des coudes à secteurs, les coudes arrondis n'étant pas économiquement viables au-dessus d'une certaine dimension.

Les coudes à secteurs (en anglais « mitred bend ») sont réalisés en soudant plusieurs secteurs d'une tuyauterie droite coupés, avec des angles précis, pour au final obtenir l'angle souhaité.

Les secteurs sont constitués par des segments de tore et articulés autour de leur axe commun.

L'inconvénient de ces types de coudes concerne leur encombrement: En effet, pour réduire la perte de charge lié au changement de direction, il est connu d'augmenter la courbure du coude. Mais alors l'encombrement devient trop important pour une installation dans les boîtes froides. Il est conseillé de respecter un rapport entre le rayon de courbure R sur le diamètre D de la tuyauterie supérieur à ou égal à 1, généralement à 1.5D. JP H10 253286 A divulgue un appareil selon la préambule de la revendication indépendante 1.

Un R/D inférieur à 1 est également possible mais cela se fera au détriment des pertes de charges.

Les coudes à aubes présentent un potentiel pour répondre aux objectifs de réduire l'énergie spécifique de séparation d'un gaz par exemple d'air et/ou de réduire l'encombrement de la boîte froide.

Selon un objet de l'invention, il est prévu un appareil selon la revendication 1. Selon d'autres aspects facultatifs de l'invention :
- l'appareil comprend au moins deux aubes alignées parallèlement les uns aux autres selon la bissectrice du coude.
- l'appareil comprend au moins cinq aubes alignées parallèlement les uns aux autres selon la bissectrice du coude.
- le coude forme un angle droit.
- le fluide est de l'air gazeux à séparer envoyé par la conduite vers la colonne de distillation.
- le fluide est de l'azote gazeux provenant de la colonne de distillation.
- le diamètre de la conduite est supérieur à 101,6 cm.
- au moins une aube s'étend en dehors de la conduite.
- le coude est situé entre l'élément et une paroi de l'enceinte.
- le rapport entre le rayon de courbure R sur diamètre D de la conduite est inférieur à 0,7.
- le rapport R/D est supérieur à 0,5
- l'encombrement au sol dû au coude est inférieur à 1,5D, de préférence inférieur à 1,2 D.
- la conduite comprend deux coudes pour changer la direction d'écoulement du fluide deux fois :
- les coudes ne comportant pas de courbure et forme un angle droit, ou sinon comportant une courbure pour lequel le rapport entre le rayon de courbure R sur diamètre D de la conduite est y où y est égal à 0,5 ou supérieur à 0,5 et inférieur à 1 et des aubes profilées déflectrices (3) sont disposées à l'intérieur de chaque coude, avec leur concavité vers le centre du coude formant une pluralité de canaux courbes parallèles.
- la colonne est la colonne basse pression d'une double colonne de séparation d'air.

L'invention sera décrite de manière plus détaillée en se référant aux figures.
La figure 1 montre un coude selon l'invention vu de l'extérieur
La figure 2 montre un coude selon l'invention
La figure 3 représente un coude selon l'art antérieur.
La figure 4 représente une coupe d'un coude selon l'invention.
La figure 5 illustre la vitesse en m/s des fluides dans un coude sans aubes.
La figure 6 illustre la vitesse dans un coude selon l'invention avec aubes.
La figure 7 illustre une enceinte selon l'invention.

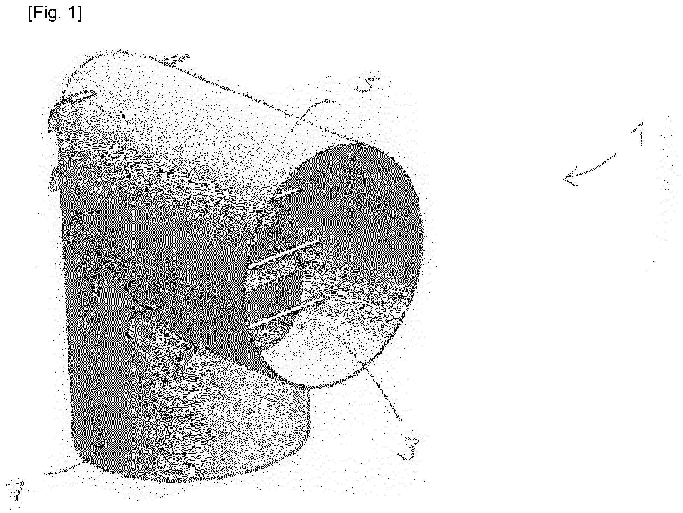

La figure 1 représente une vue d'un coude destiné à faire partie d'un appareil de séparation ou de liquéfaction d'un gaz à des températures cryogéniques comprenant une enceinte isolée. Dans cette enceinte se trouve comprenant au moins un élément devant fonctionner à des températures cryogéniques, qui est une colonne de distillation ainsi qu'une conduite de transfert de fluide provenant de ou allant vers l'élément. Cette conduite comprend un coude 1 pour changer la direction d'écoulement du fluide qui ne comporte pas de courbure, comme illustré à la figure 1, ou sinon comporte une courbure pour lequel le rapport entre le rayon de courbure R sur diamètre D de la conduite est (0,5D+x)/D où x est inférieur à 0,5 D.

Pour un coude à 90°, le rapport serait inférieur à 0,7

Des aubes profilées déflectrices 3 sont disposées à l'intérieur du coude, avec leur concavité vers le centre C du coude afin d'y former une pluralité de canaux courbes sensiblement parallèles. Un fluide (liquide ou gaz) envoyé dans la conduite change de direction d'écoulement en suivant les canaux courbes entre les aubes profilées.

On dispose dans le coude une grille d'aubes qui a pour effet de modifier la direction du flux gazeux ou liquide entrant dans le coude en le faisant tourner 90°. Ces aubes 3, de préférence en tôle mince, seront calculés selon les méthodes connues de détermination de profils aérodynamiques pour l'obtention de la déviation uniforme recherchée du flux gazeux. Ils défléchissent les flux de fluide (liquide ou gazeux) et les renvoient dans la direction de sortie du coude. Ils diminuent de façon importante les pressions statiques en amont du coude tandis qu'ils amoindrissent le décollement à l'intérieur du coude.

Les aubes 3 présentent un profil de croissant avec plan médian de symétrie et des génératrices rectilignes perpendiculaires au plan du coude, ces aubes tournant leur concavité vers le centre du coude et étant de préférence alignés selon la bissectrice du coude.

Les aubes 3 sont de préférence disposés à égale distance les uns aux autres.

Les canaux délimités entre les aubes 3 ont tous le même largueur.

La figure 1 montre qu'au moins certaines aubes peuvent être installées en les glissant dans des fentes courbes formées dans le coude 1, de sorte que les extrémités de l'aube restent à l'extérieur du coude.

Les aubes peuvent se trouver entièrement à l'intérieur du coude. Or si les extrémités des aubes se trouvent à l'extérieur, cela facilite la fabrication car les endroits à souder sont plus faciles d'accès pour mettre les aubes en place.

Le coude est composé de deux segments mitrés 5,7 dont un est relié à l'élément devant fonctionner à une température cryogénique. Cet élément peut être une colonne de distillation.

Le diamètre du segment 5,7 et donc de la conduite allant vers l'élément peut avoir n'importe lequel taille, mais l'invention apporte un avantage supplémentaire quand ce diamètre dépasse 40', donc 101,6 cm.

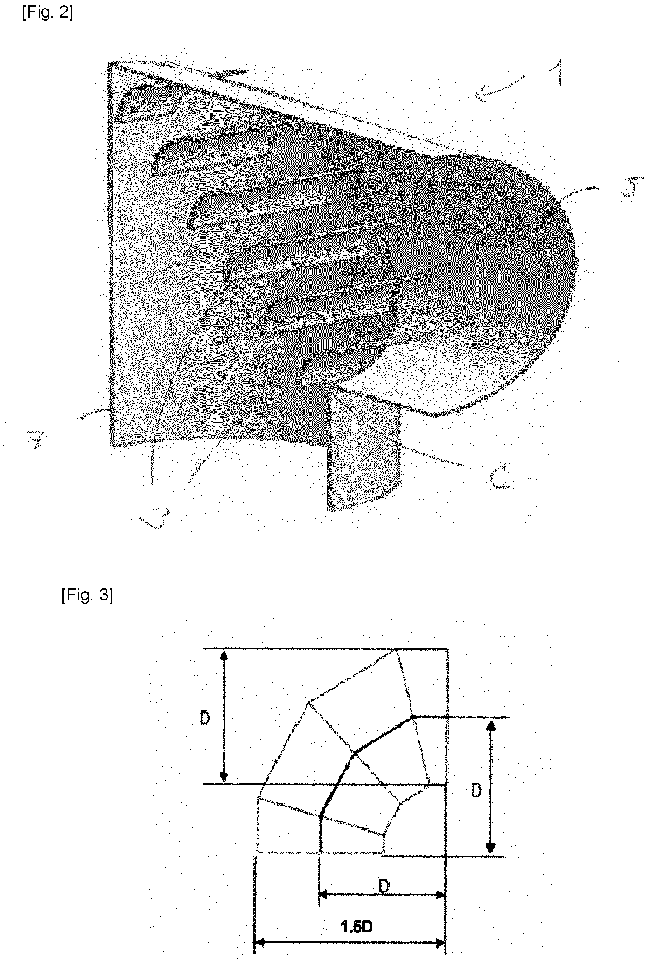

La figure 2 montre les six aubes à l'intérieur du coude dans un dessin explosé du coude 1.

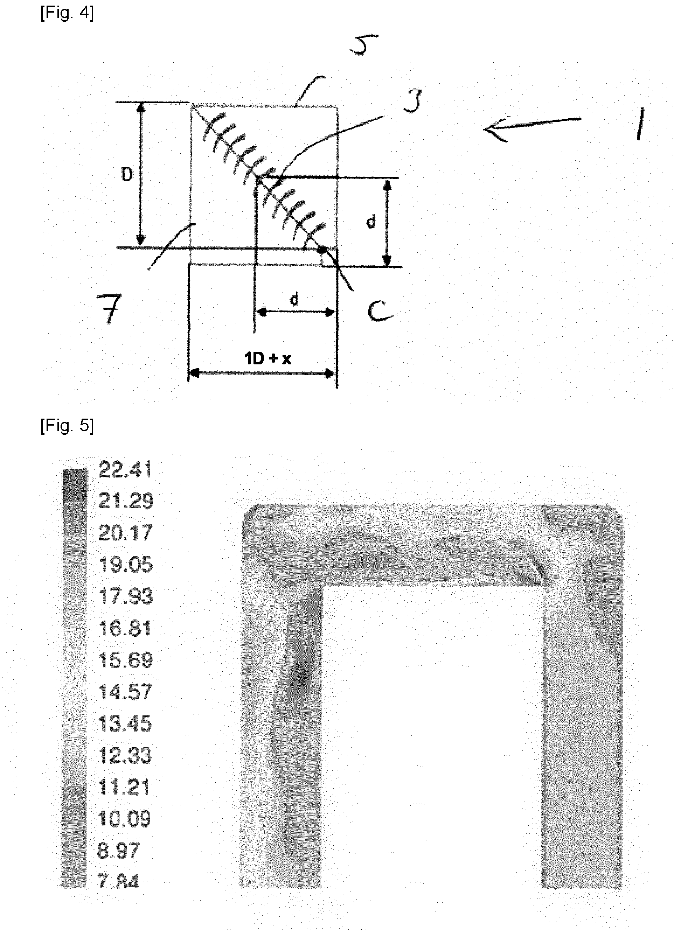

Contrairement aux coudes à secteurs, les coudes à aubes [figure 4] qui sont l'objet de l'invention n'ont pas le rapport de R/D tuyauterie supérieur à ou égal à 1 à respecter car ils n'ont pas de rayon de courbure. En effet, en regardant uniquement la fibre neutre, elle est formée par deux segments alors que pour les coudes à secteurs, elle est formée de plusieurs petits segments qui définissent une courbe [figure 3]. Dans l'exemple de la figure 3 illustrant l'art antérieur avec deux petits segments entre les extrémités de tuyau, le rapport R/D est de 1 puisque le rayon de courbure est égal à D. Nous voyons que l'encombrement du coude est de 1,5 D, ce qui veut dire qu'il faut que la boîte froide soit conçue pour contenir cet espace pour contenir le courbe du coude avec une distance de 1,5D au sol.

Dans le cas de la figure 4, selon l'invention, le coude 1 ici composé de deux segments mitrés 5,7 contient onze aubes 3 présentant un profil de croissant avec plan médian de symétrie et des génératrices rectilignes perpendiculaires au plan du coude, ces aubes tournant leur concavité vers le centre C du coude et étant de préférence alignés selon la bissectrice du coude.

A cause de la présence des aubes, il est possible de réduire la courbe du coude au minimum, ainsi le coude forme un angle droit.

Il est également possible de concevoir un coude ayant un rayon de courbure selon l'invention, en rajoutant des aubes à une structure similaire à celle de la figure 3 avec un rayon de courbure d (correspondant à R dans la revendication 1) et un diamètre de tuyau D.

Dans ce cas le rapport d/D est (0,5D+x)/D où x est 0 ou inférieur à 0,5 D, typiquement de l'ordre de 0,1D.

La distance nécessaire pour la construction du coude est désignée par x.

Ainsi on voit que l'encombrement du coude est ici limité à 1D +x.

Le coude peut par exemple recevoir de l'azote gazeux de la colonne moyenne pression ou la colonne basse pression d'une double colonne de séparation d'air par distillation cryogénique. Pour le cas où il s'agit de la colonne basse pression, le coude sera situé typiquement entre le haut de la colonne basse pression et la paroi de l'enceinte contenant la colonne. Réduire les dimensions du coude permet donc de placer la paroi plus près de la colonne et donc de réduire les dimensions de l'enceinte.

Un des avantages de l'utilisation de tels coudes à aubes est qu'ils permettent de gagner en encombrement grâce à leur meilleure compacité (à taille de tuyauterie identique).

Par ailleurs, la conception des coudes à aubes leur confère un impact positif sur les pertes de charge.

Le coefficient de perte de charges singulières d'un coude à aubes est environ 60% plus faible qu'un coude à secteurs. Cela signifie qu'un coude à aubes crée 60% de pertes de charge en moins que ce dernier.

Ces pertes de charges sauvées peuvent alors se traduire de deux façons différentes:
- Soit par une réduction des tuyauteries, c'est à dire une énergie de séparation conservée mais pour un encombrement moindre
- Soit directement par une réduction de l'énergie de séparation

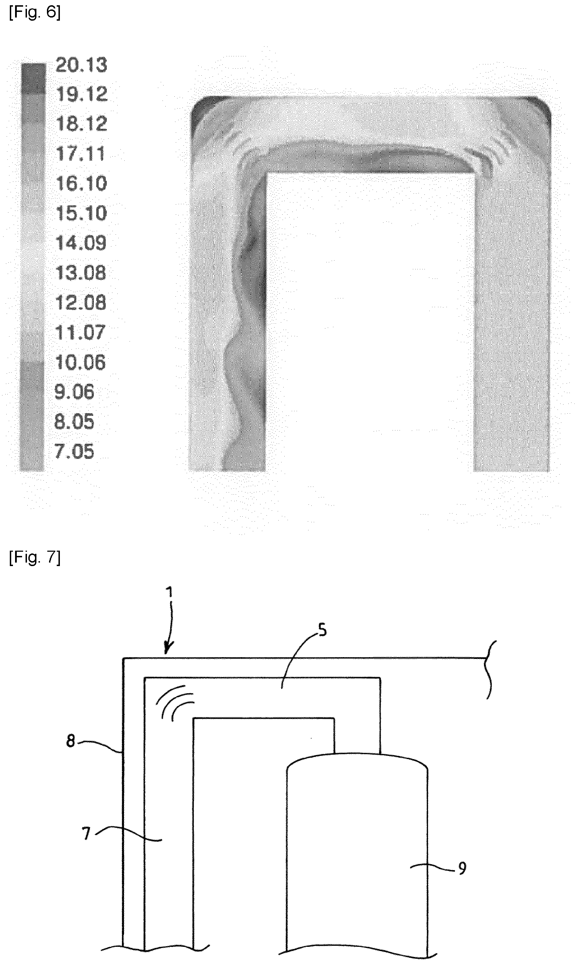

Enfin, la présence de aubes courbes à l'intérieur du coude a pour effet de stabiliser le fluide, perturbé par un changement de direction, plus rapidement en aval. Des études de la dynamique des fluides par la résolution numérique des équations permettent de visualiser cet effet. La figure 5 illustre la vitesse en m/s des fluides dans un coude sans aubes et la figure 6 illustre la vitesse dans un coude selon l'invention avec aubes.

Ici deux coudes sont illustrés mais la conduite peut comprendre un seul coude.

Certains éléments sur les tuyauteries, notamment les appareils de débitmétrie, ont des exigences de longueur droite minimale en amont pour pouvoir fonctionner correctement. En effet pour obtenir des profils de vitesse suffisamment uniformisés dans la section de passage du fluide pour permettre une mesure précise de débit, une certaine longueur est requise.

L'utilisation de coude à aubes pourrait ainsi réduire ces longueurs et améliorer le tracé des tuyauteries.

Au moins une dimension de l'enceinte isolée est réduite, comparée à celle qu'aurait une enceinte isolée entourant une conduite de même diamètre qui ne serait pas pourvue des aubes.

La perte de charge du fluide provoquée par le changement de direction dans le coude est inférieure à celle générée lors du changement de direction dans la ligne si celle-ci n'était pas équipée d'aubes.

Au final, les coudes à aubes ont un réel avantage économique puisqu'ils permettent soit un gain en énergie soit un gain d'investissement ; leur compacité et leur performance permettent de réduire la taille de la boîte froide.
- La figure 7 montre une vue partielle d'une enceinte isolée 8 contenant une colonne de distillation 9 qui est la colonne basse pression d'une double colonne de séparation d'air. La conduite 5 d'azote basse pression comprend un coude 1 permettant d'envoyer l'azote verticalement vers le bas de la conduite ainsi qu'un deuxième coude. L'usage d'aubes permet de réduire la taille de l'enceinte puisque le coude prend moins de place. Chacun des deux peut ne pas comporter de courbure et forme un angle droit, ou sinon comporter une courbure pour lequel le rapport entre le rayon de courbure R sur diamètre D de la conduite est y où y est égal à 0,5 ou supérieur à 0,5 et inférieur à 1.

Des aubes profilées déflectrices 3 peuvent être disposées à l'intérieur de chaque coude, avec leur concavité vers le centre du coude formant une pluralité de canaux courbes parallèles.

## Revendications

1. Appareil de séparation ou de liquéfaction d'un gaz à des températures cryogéniques comprenant une enceinte isolée (8) comprenant au moins un élément (9) devant fonctionner à des températures cryogéniques, l'élément étant une colonne de distillation, ainsi qu'une conduite de transfert de fluide provenant de ou allant vers l'élément, la conduite (5,7) ayant un diamètre D comprenant au moins un coude (1) pour changer la direction d'écoulement du fluide **caractérisé en ce que**:
- le coude ne comporte pas de courbure et forme un angle droit, ou sinon comporte une courbure pour lequel le rapport entre le rayon de courbure R sur diamètre D de la conduite est y où y est égal à 0,5 ou supérieur à 0,5 et inférieur à 1 et
- des aubes profilées déflectrices (3) sont disposées à l'intérieur du coude, avec leur concavité vers le centre du coude formant une pluralité de canaux courbes parallèles.

2. Appareil selon la revendication 1 comprenant au moins deux aubes (3) alignées parallèlement les uns aux autres selon la bissectrice du coude (1).

3. Appareil selon la revendication 1 ou 2 où le coude (1) forme un angle droit.

4. Appareil selon l'une des revendications précédentes 1 à 3 dans lequel le fluide est de l'air gazeux à séparer envoyé par la conduite vers la colonne de distillation.

5. Appareil selon l'une des revendications précédentes 1 à 3 dans lequel le fluide est de l'azote gazeux provenant de la colonne de distillation.

6. Appareil selon l'une des revendications précédentes dans lequel le diamètre D de la conduite (5,7) est supérieur à 101,6 cm.

7. Appareil selon une des revendications précédentes dans lequel au moins une aube (3) s'étend en dehors de la conduite (5,7).

8. Appareil selon l'une des revendications précédentes dans lequel le coude (1) est situé entre l'élément et une paroi de l'enceinte.

9. Appareil selon l'une des revendications précédentes dans lequel le rapport entre le rayon de courbure R sur diamètre D de la conduite (5,7) est inférieur à 1, de préférence inférieur à 0,7.

10. Appareil selon l'une des revendications précédentes dans lequel l'encombrement au sol dû au coude (1) est inférieur à 1,5D, de préférence inférieur à 1,2 D.

11. Appareil selon l'une des revendications précédentes dans lequel la conduite comprend deux coudes pour changer la direction d'écoulement du fluide deux fois :
- les coudes ne comportant pas de courbure et forme un angle droit, ou sinon comportant une courbure pour lequel le rapport entre le rayon de courbure R sur diamètre D de la conduite est y où y est égal à 0,5 ou supérieur à 0,5 et inférieur à 1 et
- des aubes profilées déflectrices (3) sont disposées à l'intérieur de chaque coude, avec leur concavité vers le centre du coude formant une pluralité de canaux courbes parallèles.

12. Appareil selon l'une des revendications précédentes dans lequel la colonne (9) est la colonne basse pression d'une double colonne de séparation d'air.

## Patentansprüche

1. Gerät zum Trennen oder Verflüssigen eines Gases bei kryogenen Temperaturen, beinhaltend ein isoliertes Gehäuse (8), das mindestens ein Element (9), das bei kryogenen Temperaturen arbeiten muss, wobei das Element eine Destillationskolonne ist, sowie eine Leitung zum Transfer eines Fluids, das von dem Element kommt oder zu diesem geleitet wird, beinhaltet, wobei die Leitung (5, 7) einen Durchmesser D aufweist und mindestens einen Bogen (1) beinhaltet, um die Strömungsrichtung des Fluids zu ändern, **dadurch gekennzeichnet, dass**:
- der Bogen keine Krümmung umfasst und einen rechten Winkel bildet, oder andernfalls eine Krümmung umfasst, bei der das Verhältnis zwischen dem Krümmungsradius R und dem Durchmesser D des Rohrs y ist, wobei y gleich 0,5 oder größer als 0,5 und kleiner als 1 ist, und
- profilierte Umlenkschaufeln (3) im Inneren des Bogens angeordnet sind, wobei ihre Konkavität, die zu der Mitte des Bogens hin zeigt, eine Vielzahl von parallelen gebogenen Kanälen bildet.

2. Gerät nach Anspruch 1, beinhaltend mindestens zwei Schaufeln (3), die gemäß der Winkelhalbierenden des Bogens (1) parallel zueinander ausgerichtet sind.

3. Gerät nach Anspruch 1 oder 2, wobei der Bogen (1) einen rechten Winkel bildet.

4. Gerät nach einem der vorhergehenden Ansprüche 1 bis 3, wobei das Fluid zu trennende gasförmige Luft ist, die durch das Rohr zu der Destillationskolonne geleitet wird.

5. Gerät nach einem der vorhergehenden Ansprüche 1 bis 3, wobei das Fluid gasförmiger Stickstoff ist, der von der Destillationskolonne kommt.

6. Gerät nach einem der vorhergehenden Ansprüche, wobei der Durchmesser D des Rohrs (5, 7) größer als 101,6 cm ist.

7. Gerät nach einem der vorhergehenden Ansprüche, wobei sich mindestens eine Schaufel (3) nach außerhalb des Rohrs (5, 7) erstreckt.

8. Gerät nach einem der vorhergehenden Ansprüche, wobei sich der Bogen (1) zwischen dem Element und einer Wand des Gehäuses befindet.

9. Gerät nach einem der vorhergehenden Ansprüche, wobei das Verhältnis zwischen dem Krümmungsradius R und dem Durchmesser D des Rohrs (5, 7) kleiner als 1, vorzugsweise kleiner als 0,7 ist.

10. Gerät nach einem der vorhergehenden Ansprüche, wobei der durch den Bogen (1) bedingte Platzbedarf am Boden kleiner als 1,5D, vorzugsweise kleiner als 1,2 D ist.

11. Gerät nach einem der vorhergehenden Ansprüche, wobei das Rohr zwei Bögen beinhaltet, um die Strömungsrichtung des Fluids zwei Mal zu ändern, wobei:
- die Bögen keine Krümmung umfassen und einen rechten Winkel bilden, oder andernfalls eine Krümmung umfassen, bei der das Verhältnis zwischen dem Krümmungsradius R und dem Durchmesser D des Rohrs y ist, wobei y gleich 0,5 oder größer als 0,5 und kleiner als 1 ist, und
- profilierte Umlenkschaufeln (3) im Inneren jedes Bogens angeordnet sind, wobei ihre Konkavität, die zu der Mitte des Bogens hin zeigt, eine Vielzahl von parallelen gebogenen Kanälen bildet.

12. Gerät nach einem der vorhergehenden Ansprüche, wobei die Kolonne (9) die Niederdruckkolonne einer Doppelkolonne zum Trennen von Luft ist.

## Claims

1. Apparatus for the separation or liquefaction of a gas at cryogenic temperatures, which comprises an isolated chamber (8) comprising at least one element (9) having to operate at cryogenic temperatures, the element being a distillation column, and also a pipe for transferring fluid coming from or going to the element, the pipe (5, 7) having a diameter D comprising at least one bend (1) for changing the direction of flow of the fluid, **characterized in that**:
- the bend does not comprise a curvature and forms a right angle, or alternatively comprises a curvature for which the ratio of the radius of curvature R to the diameter D of the pipe is y, where y is equal to 0.5 or greater than 0.5 and less than 1 and
- profiled deflector vanes (3) are placed inside the bend, with their concavity towards the centre of the bend forming a plurality of parallel curved ducts.

2. Apparatus according to Claim 1, comprising at least two vanes (3) aligned parallel to one another along the bisector of the bend (1).

3. Apparatus according to Claim 1 or 2, wherein the bend (1) forms a right angle.

4. Apparatus according to one of preceding Claims 1 to 3, wherein the fluid is gaseous air to be separated which is sent via the pipe to the distillation column.

5. Apparatus according to one of preceding Claims 1 to 3, wherein the fluid is gaseous nitrogen which comes from the distillation column.

6. Apparatus according to one of the preceding claims, wherein the diameter D of the pipe (5, 7) is greater than 101.6 cm.

7. Apparatus according to one of the preceding claims, wherein at least one vane (3) extends out of the pipe (5, 7) .

8. Apparatus according to one of the preceding claims, wherein the bend (1) is located between the element and a wall of the chamber.

9. Apparatus according to one of the preceding claims, wherein the ratio of the radius of curvature R to the diameter D of the pipe (5, 7) is less than 1, preferably less than 0.7.

10. Apparatus according to one of the preceding claims, wherein the footprint due to the bend (1) is less than 1.5 D, preferably less than 1.2 D.

11. Apparatus according to one of the preceding claims, wherein the pipe comprises two bends for changing the direction of flow of the fluid twice:
- the bends not comprising a curvature and forming a right angle, or alternatively comprising a curvature for which the ratio of the radius of curvature R to the diameter D of the pipe is y, where y is equal to 0.5 or greater than 0.5 and less than 1 and
- profiled deflector vanes (3) are placed inside each bend, with their concavity towards the centre of the bend forming a plurality of parallel curved ducts.

12. Apparatus according to one of the preceding claims, wherein the column (9) is the low-pressure column of a double air separation column.
